Europäisches Patentamt

(19) European Patent Office

Office européen des brevets

(11) Publication number: **0 209 305**
**B1**

(12) **EUROPEAN PATENT SPECIFICATION**

(45) Date of publication of patent specification: **26.09.90**

(21) Application number: **86305236.1**

(22) Date of filing: **07.07.86**

(51) Int. Cl.⁵: **B 21 K 1/56,** F 16 B 25/00,
B 21 H 3/02

(54) Method and apparatus for making screws having a drill section and a reamer section.

(30) Priority: **12.07.85 JP 154431/85**

(43) Date of publication of application:
**21.01.87 Bulletin 87/04**

(45) Publication of the grant of the patent:
**26.09.90 Bulletin 90/39**

(84) Designated Contracting States:
**DE FR GB IT SE**

(56) References cited:
**GB-A-1 333 871**
**JP-A-58 152 919**
**US-A-3 550 255**
**US-A-4 407 620**

(73) Proprietor: **Yugen Kaisha Shinjo Seisakusho**
**1-22, Matsu 3-chome**
**Nishinariku Osaka (JP)**

(72) Inventor: **Kariya, Toshihide**
**10129 Maenohama Ki'irecho**
**Ibusukigun Kagoshima (JP)**

(74) Representative: **Rooney, Paul Blaise et al**
**D.Young & Co. 10 Staple Inn**
**London WC1V 7RD (GB)**

Courier Press, Leamington Spa, England.

## Description

The invention relates to a method of and apparatus for making a screw having a drill portion, a reamer portion and a threaded portion, the screw functioning as a drill screw as well as a reamer.

Patent Specification US-A-3 550 255 discloses a method of forming drill screws by a first pinching punching operation effected on a blank between a pair of dies, to create flutes in a shank thereby forming a drill tip, followed by a thread forming and deburring operation between thread rolling and finishing dies, the drill tip having a greater width at its tip than adjacent the screw thread which is formed on an upper portion of the shank, thereby to reduce frictional drag upon insertion of the drill screw into a hole in use.

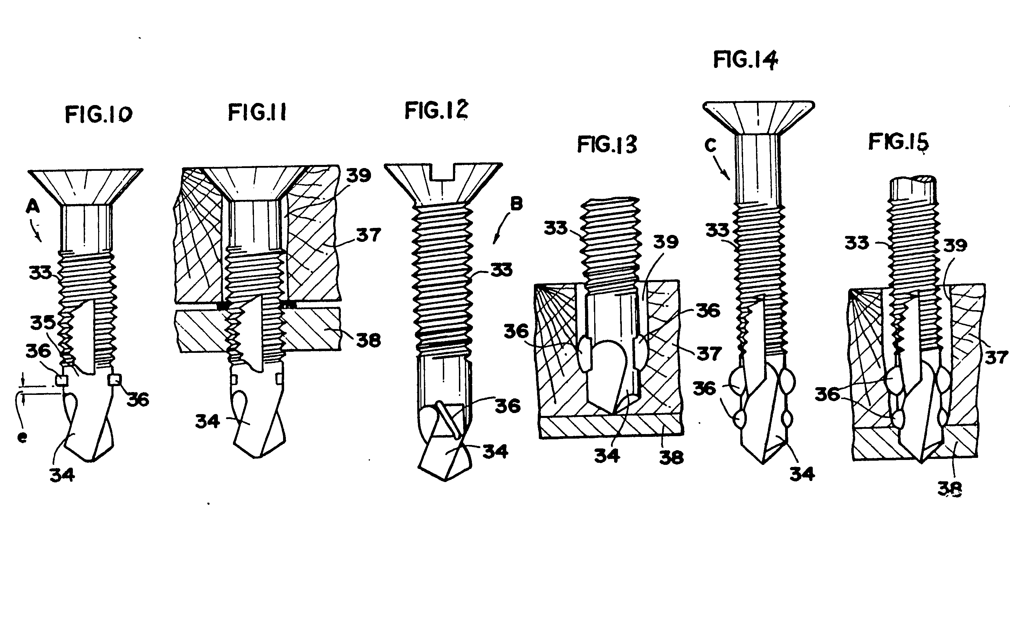

It has been also previously proposed in the art to employ drill screws incorporating a reamer to join a first, soft material, such as a wooden panel, to a second, hard material, such as a metal sheet. There are several kinds of such drill screws; examples of which will be described with reference to Figures 10 to 15 of accompanying drawings.

The screw has a threaded portion 33, a drill portion 34, and reamer edges 36 on a shank 35 interlocated between the threaded portion 33 and the drill portion 34 or in the drill portion 34. The reamer edges 36 protrude beyond the maximum diameter of the threaded portion 33.

When the first, soft material 37 is to be joined to the second, hard material 38, such as a structure constituted by a metal panel, holes 39 are first bored by the drill portion 34 and the reamer edges 36 in the first material 37. The hole 39 will be a clearance fit over the threaded portion as best shown in Figures 11 and 13. If the hole were not such a clearance fit and the threaded portion were forced into the first material, the panel 37 and the sheet 38 would be separated because of the difference between the speed at which the drill portion 34 makes a hole in the second metal sheet and the speed at which the threaded portion 33 advances in the first wooden panel 37. The reamer edges 36 are constructed so that they fracture when they come into contact with the second, hard material 38 in which the threaded portion 33 is to be engaged.

In manufacture of the conventional screws A, B and C of Figures 10 and 11, 12 and 13 and 14 and 15 respectively, the first step is that the reamer edges 36 are shaped by means of a pinch punching machine or press. This means that the conventional process requires an increased number of steps.

As a result the production cost is increased as compared with ordinary types of drill screws. The screw A illustrated in Figures 10 and 11 has no chip-discharge groove in the portion e of 35, thereby causing a choking problem due to the deposit of chips from the first material 37 cut by the drilling edges. This prevents smooth boring through the first material 37.

The screws B and C in Figures 12 and 13 and 14 and 15 have been devised so as to solve the problems pointed out with respect to the screw A. They have reamer edges 36 in the land of the drill portion, but the position of the reamer edges 36 is restricted in the peripheral direction. In forming the reamer edges 36 it is difficult to locate them in the restricted area. This leads to an inefficient production of screws and an increased production cost, thereby discouraging wide use of the screws.

There is a proposal for shaping the drill portion and the reamer section in the same process step; for example, the proposal disclosed in Japanese Patent Publication (JP-A-58-152919). This is to reduce the production cost. However, the specification and drawings of this publication do not disclose a full description of the method and apparatus for making the proposed screw.

According to one aspect of the invention there is provided a method of forming screws having a drill portion, a reamer portion and a threaded portion comprising a first operation of shaping the drill portion in a tip of a shank of a blank by cold forging between dies, in which first operation reamer edges of the reamer portion are formed extending alongside cutting lips of the drill portion and a second, rolling operation in which an upper part of the shank is formed as the threaded portion, wherein, in the first operation, the reamer edges are formed so that they protrude radially at least to the maximum diameter of the threaded portion and lower ends of the reamer edges are spaced a determined axial distance from cutting lips of the drill portion but upper ends of the reamer portions are allowed to terminate at random; and in the second operation upper parts of the reamer edges are crushed so that the reamer edges have a uniform thickness and length, thereby ensuring that the upper parts of the reamer edges have equal fragility.

According to another aspect of the invention there is provided apparatus for making screws having a drill portion, a reamer portion and a threaded portion comprising a pair of first dies for shaping the lower end of a blank into the drill portion, each of the first dies comprising a first recess to shape a respective land in the blank and a second recess to shape a respective reamer edge of the reamer portion to at least as great a radial extent as the diameter of the threaded portion, the second recess extending axially from a determined distance from the outer end of an end cutting tip of the first recess, partially co-extensive with the first recess alongside a cutting edge thereof and being open upwardly towards the top surface of the die; and a second die comprising a crushing portion located below a thread rolling portion to shape the threaded portion in the blank, the crushing portion being operative to crush upper parts of the reamer edges so as to give them uniform thickness and length and thus equal fragility in use.

The invention is diagrammatically illustrated by way of example in the accompanying drawings, in which:-

Figure 1 is an elevation showing a pair of dies used in carrying out the method of the invention;

Figure 2 is a plan view showing the dies of Figure 1 placed on opposite sides of a blank;

Figures 3 to 5 are views exemplifying successive steps of the method of the invention;

Figure 6 is a vertical cross-section through a main phase of a rolling process of the method of the invention;

Figure 7 is a front view of a finished screw formed by the method of the invention;

Figure 8 is a side view, with part omitted, of the screw of Figure 7;

Figure 9 shows the end face of the screw of Figure 7; and

Figures 10 to 15 are elevations showing conventional screws.

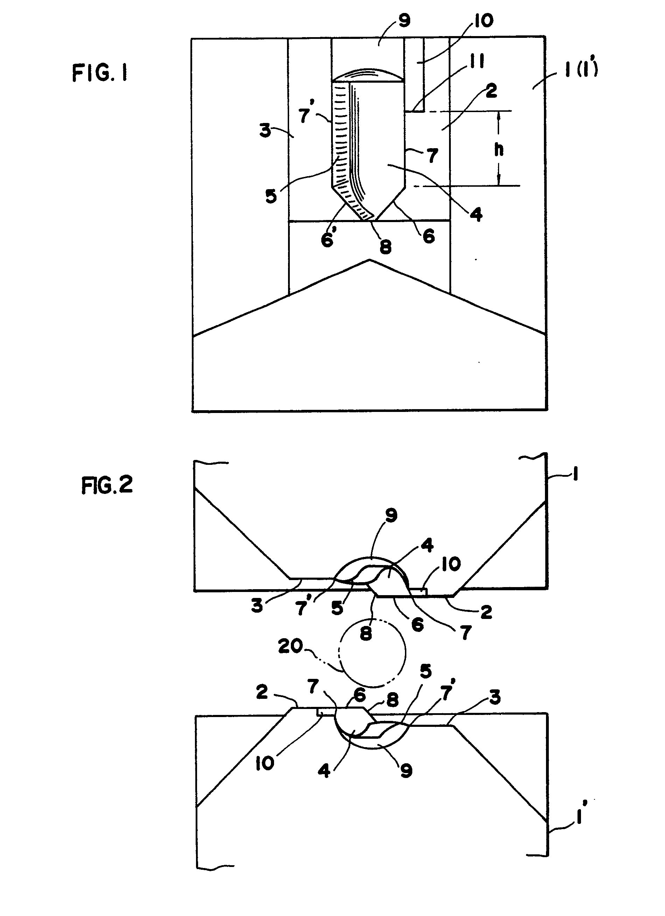

Referring to the drawings, Figures 1 and 2 show dies 1 and 1' for forming a drill portion 24 and a reamer portion 30 on a screw. The dies are provided as a pair and the die for shaping the drill portion 24 is substantially as disclosed in Japanese Patent Publication JP-A-59-7046 (U.S-A-4,407,620). Each of the dies has two reference faces 2 and 3, which are in parallel but slightly offset. A recess 4 is produced with reference to the face 2, so as to shape a land 25 in the drill portion 24, and a projection 5 is formed with reference to the face 3, so as to produce a chip-discharge groove 26. The die also has edges 6 and 7 on the face 2, which define an end cutting lip 27 and a side cutting lip 28 of the screw, respectively. In addition, the die is provided with edges 6' and 7' on the face 3, which define the end cutting lip 27 and another side cutting lip 28 of the screw, respectively. Furthermore, the die is provided with a third edge 8 for shaping a chisel edge 29, the third edge 8 being defined by a line connecting the lower parts of the edges 6 and 6'.

A space 9 is provided to allow the shank 20 to elongate when the drill portion 24 is shaped, which space is open towards the top surface of the die.

There is provided a recess 10 in the face 2, so as to produce the reamer portion 30, the recess 10 extending axially alongside the edge 7, and projecting radially at least to the maximum diameter of a threaded portion 23 of the screw. A lower end 11 of the recess 10 is limited to a position axially spaced from the outermost part of the end edge 6 by a distance h (this distance is determined in accordance with the thickness of the second material 38). The upper part of the recess 10 is open up towards the space 9 and the top surface of the die. The thickness of the reamer portion 30 is determined in accordance with the depth of the recess 10 as measured perpendicular to the face 2.

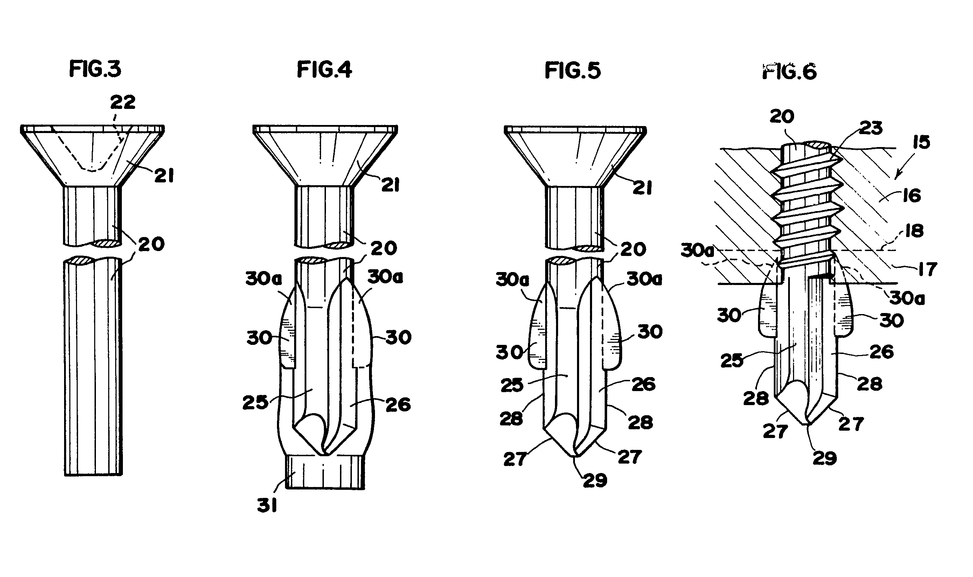

Referring to Figures 3 to 5, the process of shaping the drill portion 24 and the reamer portion 30 will be described:

The blank shown in Figure 3 has a shank 20 and a head 21 and the screw can be rotated by means of a driver engaged in a recess 22. The shank 20 is pressed between the dies 1 and 1' so as to shape the blank as desired and a metal flash 31 will be swaged out under pressure as shown in Figure 4. The reamer portion 30 is shaped alongside the side cutting lip 28, and has its lower edge determined by the lower edge of the recess 10. An upper part 30a of the reamer portion 30 can elongate upwards within the recess 10. Because of the unique construction allowing such elongation of the reamer portion 30, the dies are protected against breakage or fracture. The drill portion 24 is compressed so that the thickness between the lands 25 is less than 80% of the outside diameter d of the drill portion 24. By so shaping the profile of the drill portion 24 to desired dimensions the reamer portion 30 is formed to a desired width at which it protrudes beyond the maximum diameter of the threaded portion 23.

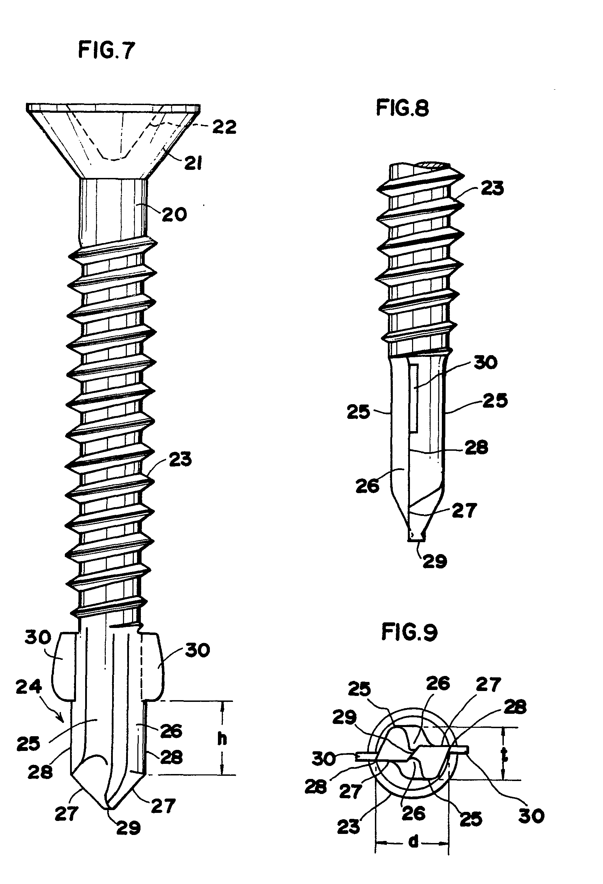

After the operation mentioned above is finished, the blank advances to a second, rolling operation and is subjected to a rolling die 15 as shown in Figure 6. The rolling die 15 has a thread-forming portion 16 and also a crushing portion 17 in which the upper parts 30a of the reamer portion 30 are compressed and shaped to have a uniform thickness and equal length, thereby ensuring that an equal fragility is imparted to the reamer portions 30. As shown in Figures 7 to 9, in the rolling process the reamer portions 30 are unified in the thickness and length of their root portions, which portions are formed along the lips 28 of the drill portion 24. In the embodiment shown in Figure 6 the rolling die 15 has the thread-forming portion 16 and the crushing portion 17 constructed in one-piece, but it is possible to divide them into two separate parts along the dotted lines 18 in Figure 6.

**Claims**

1. A method of forming screws having a drill portion, a reamer portion and a threaded portion comprising a first operation of shaping the drill portion (24) in a tip of a shank (20) of a blank by cold forging between dies, in which first operation reamer edges (30) of the reamer portion are formed extending alongside cutting lips (28) of the drill portion (24) and a second, rolling operation in which an upper part of the shank (20) is formed as the threaded portion (23), wherein, in the first operation, the reamer edges (30) are formed so that they protrude radially at least to the maximum diameter of the threaded portion (23) and lower ends of the reamer edges (30) are spaced a determined axial distance (h) from cutting lips (27) of the drill portion (24) but upper ends of the reamer portions are allowed to terminate at random; and in the second operation upper parts (30a) of the reamer edges (30) are crushed so that the reamer edges (30) have a uniform thickness and length, thereby ensuring that the upper parts (30a) of the reamer edges (30) have equal fragility.

2. A method according to claim 1, wherein, in the first operation, the thickness between the lands in the drill portion (24) is compressed so as to be less than 80% of the outside diameter of the drill portion (24).

3. Apparatus for making screws having a drill portion (24), a reamer portion (30) and a threaded portion (23) comprising a pair of first dies (1, 1') for shaping the lower end of a blank into the drill portion (24), each of the first dies (1, 1') comprising a first recess (4) to shape a respective land (25) in the blank and a second recess (10) to shape a respective reamer edge (30) of the reamer portion to at least as great a radial extent as the diameter of the threaded portion (23), the second recess (10) extending axially from a determined distance (h) from the outer end of an end cutting tip (6) of the first recess (4), partially co-extensive with the first recess (4) alongside a cutting edge (7) thereof and being open upwardly towards the top surface of the die; and a second die (15) comprising a crushing portion (17) located below a thread rolling portion (16) to shape the threaded portion (23) in the blank, the crushing portion (17) being operative to crush upper parts (30a) of the reamer edges (30) so as to give them uniform thickness and length and thus equal fragility in use.

**Patentansprüche**

1. Verfahren zum Ausbilden von Schrauben mit einem Bohrabschnitt, einem Räumabschnitt und einem Gewindeabschnitt, welches einen ersten Vorgang aufweist, bei welchem der Bohrabschnitt (24) an der Spitze eines Schaftes (20) von einem Rohling geformt wird durch Kaltschmieden zwischen Stempeln, wobei bei diesemersten Vorgang Räumkanten (30) des Räumabschnittes gebildet sind, welche sich entlang von Schneidlippen (28) des Bohrabschnittes (24) erstrecken, und einen zweiten Vorgangaufweist, nämlicheinen-Rollvorgang, bei welchem ein oberer Teil des Schaftes (20) als Gewindeabschnitt (23) ausgebildet wird, wobei bei dem ersten Vorgang die Räumkanten (30) gebildet werden, so daß sie in radialer Richtung zumindest bis auf den maximalen Durchmesser des Gewindeabschnittes (23) hervorspringen, und wobei die unteren Enden der Räumkanten (30) um einen festgelegten axialen Abstand (h) von den Schneidlippen (27) des Bohrabschnittes (24) beabstandet sind, jedoch die oberen Enden der Räumabschnitte zufällig (beliebig) enden können, und wobei bei dem zweiten Vorgang die oberen Teile (30a) der Räumkanten (30) gebrochen werden, so daß die Räumkanten (30) eine gleichmäßige Dicke und Länge haben, wodurch sichergestellt ist, daß die oberen Teile (30a) der Räumkanten (30) die gleiche Brüchigkeit haben.

2. Verfahren nach Anspruch 1, wobei während des ersten Vorgangs die Dicke zwischen den Stegen in dem Gewindeabschnitt (24) so komprimiert ist, daß sie weniger als 80% des Außendurchmessers des Bohrabschnittes (24) beträgt.

3. Vorrichtung zum Herstellen von Schrauben, welche einen Bohrabschnitt (24), einen Räumabschnitt (30) und einen Gewindeabschnitt (23) haben, mit einem Paar erster Stempel (1, 1') zum Formen des unteren Endes eines Rohlings zu dem Bohrabschnitt (24), wobei jeder der ersten Stempel (1, 1') eine erste Aussparung (4) aufweist, um einen entsprechenden Steg (25) in dem Rohling auszuformen sowie eine zweite Aussparung (10) aufweist, um eine entsprechende Räumkante (30) des Räumabschnittes auf zumindest eine so große radiale Erstreckung wie der Durchmesser des Gewindeabschnittes (23) auszuformen, wobei die zweite Aussparung (10) sich in axialer Richtung von einem festgelegten Abstand (h) vom äußeren Ende einer Endschneidspitze (6) der ersten Aussparung (4) aus erstreckt, sich teilweise gemeinsam mit der ersten Aussparung entlang einer Schneidkante (7) derselben erstreckt und oben in Richtung auf die obere Fläche des Stempels offen ist, und einen zweiten Stempel (15) aufweist, welcher einen Brechabschnitt (17) aufweist, der unter einem Gewinderollabschnitt (16) liegt, um den Gewindeabschnitt (3) in dem Rohling auszuformen, wobei der Brechabschnitt (17) so betätigbar ist, daß er obere Teile (30a) der Räumkanten (30) abbricht, um ihnen eine gleichmäßige Dicke und Länge und damit für den Gebrauch eine gleiche Brüchigkeit zu geben.

**Revendications**

1. Procédé de fabrication de vis présentant une partie foreuse, une partie aléseuse et une partie filetée comprenant une première opération consistant à façonner la partie foreuse (24) dans une pointe d'une tige (20) d'une pièce par forgeage à froid entre des matrices, au cours de laquelle première opération les bords aléseurs (30) de la partie aléseuse sont formés s'étendant le long des bords coupants (28) de la partie foreuse (24) et une seconde opération, de laminage, au cours de laquelle une partie supérieure de la tige (20) est formée en tant que partie filetée (23), où, dans la première opération, les bords aléseurs (30) sont formés de sorte à faire saillie radialement au moins jusqu'au diamètre maximal de la partie filetée (23) et les extrémités inférieures des bords aléseurs (30) sont espacées d'une distance axiale déterminée (h) des bords coupants (27) de la partie foreuse (24) mais les extrémités supérieures des parties aléseuses sont laissées se terminer de manière aléatoire; et au cours de la seconde opération les parties supérieures (30a) des bords aléseurs (30) sont écrasées de sorte que les bords aléseurs (30) présentent une épaisseur et une longueur uniformes, garantissant ainsi que les parties supérieures (30a) des bords aléseurs (30) présentent une égale fragilité.

2. Procédé selon la revendication 1, dans lequel, au cours de la première opération, l'épaisseur entre les crêtes dans la partie foreuse (24) est comprimée afin d'être inférieure à 80% du diamètre extérieur de la partie foreuse (24).

3. Appareil de fabrication de vis présentant une partie foreuse (24), une partie aléseuse (30) et une partie filetée (23) comprenant une paire de premières matrices (1, 1') pour façonner l'extrémité inférieure d'une pièce en partie foreuse (24), chaque première matrice (1, 1') comprenant un premier évidement (4) pour façonner une crête respective (25) dans la pièce et un second évidement (10) pour façonner un bord aléseur respectif (30) de la partie aléseuse jusqu'au moins une étendue radiale aussi grande que le diamètre de la partie filetée (23), le second évidement (10) s'étendant axialement à partir d'une distance déterminée (h) de l'extrémité externe d'une pointe coupante d'extrémité (6) du premier évidement (4), s'étendant en partie avec le premier évidement (4) le long d'un bord coupant (7) de ce dernier et étant ouvert sur le haut vers la surface supérieure de la matrice; et une seconde matrice (15) comprenant une partie d'écrasement (17) située sous une partie de laminage des filets (16) pour façonner la partie filetée (23) dans la pièce, la partie d'écrasement (17) servant à écraser les parties supérieures (30a) des bords aléseurs (30) afin de leur donner une épaisseur et une longueur uniformes et donc une égale fragilité à l'utilisation.

FIG. 1

FIG.2

1

FIG.3    FIG.4    FIG.5    FIG.6

EP 0 209 305 B1

## FIG.7

## FIG.8

## FIG.9

FIG.10 FIG.11 FIG.12 FIG.13 FIG.14 FIG.15

EP 0 209 305 B1